# EUROPÄISCHE PATENTSCHRIFT

(11) **EP 3 762 135 B1**
(45) Veröffentlichungstag und Bekanntmachung des Hinweises auf die Patenterteilung: **06.03.2024**
(21) Anmeldenummer: 19702054.8
(22) Anmeldetag: 24.01.2019
(51) Int. Cl.: B01J 8/00, B65G 53/00, F16J 15/00, F16K 5/00, F16K 11/00, F16K 11/072, F16K 11/20

(54) **VERTEILERVORRICHTUNG, VERFAHREN ZUM FÜHREN VON STOFFEN UND VERFAHREN ZUM REINIGEN EINER VERTEILERVORRICHTUNG**
DISTRIBUTOR DEVICE, METHOD FOR GUIDING MATERIALS, AND METHOD FOR CLEANING A DISTRIBUTOR DEVICE
DISPOSITIF DE DISTRIBUTION, PROCÉDÉ POUR LE GUIDAGE DE MATIÈRES ET PROCÉDÉ POUR LE NETTOYAGE D'UN DISPOSITIF DE DISTRIBUTION

(30) Priorität: 09.03.2018 DE 102018203600
(43) Veröffentlichungstag der Anmeldung: 13.01.2021
(73) Patentinhaber: Hüttlin GmbH, 79650 Schopfheim (DE)
(72) Erfinder: GROSS, Martin, 79585 Steinen (DE); PAASCHE, Christian Karl, 79713 Bad Saeckingen (DE)
(74) Vertreter: DREISS Patentanwälte PartG mbB
(86) Internationale Anmeldenummer: PCT/EP2019/051759
(87) Internationale Veröffentlichungsnummer: WO 2019/170319

(56) Entgegenhaltungen:
- WO-A1-2011/073838
- DE-A1- 3 418 325
- FR-A1- 2 736 701
- US-A- 4 250 817
- US-A- 4 313 386

## Beschreibung

### Stand der Technik

Die vorliegende Erfindung betrifft eine Verteilervorrichtung zum Führen von Stoffen, insbesondere pharmazeutischen partikulären Feststoffen. Ferner betrifft die Erfindung ein Verfahren zum Führen von Stoffen und weiterhin ein Verfahren zum Reinigen einer Verteilervorrichtung.

Aus dem Stand der Technik sind vielfältige Vorrichtungen zum Verteilen von Stoffen bekannt. Diese sind jedoch meist konstruktiv aufwendig, teuer und schlecht bedienbar. Zudem sind diese nur mit hohem Aufwand reinigbar und nicht im Einbauzustand reinigbar, sondern müssen demontiert werden. Das heißt, eine vollständig rückstandslose Reinigung dieser Vorrichtungen ist häufig nur durch Eingriff des Anwenders möglich.

So ist beispielsweise aus der DE 10 2014 103 661 A1 ein Mehrwegekugelhahn bekannt, welcher jedoch zur Reinigung ausgebaut werden muss. Außerdem können große Antriebskräfte notwendig sein, um diesen Mehrwegekugelhahn zu verstellen.

Zudem besteht bei bekannten Vorrichtungen häufig das Problem einer Verschleppung von Stoffresten in andere Kammern und eine Verschmutzung von Ritzen in Dichtungsräumen oder Hinterschneidungen. Für eine vollständige Reinigung müssen diese Vorrichtungen in der Regel daher demontiert werden.

US 4 313 386 A und DE 34 18 325 A1 zeigen jeweils eine Vorrichtung mit Merkmalen des Anspruchs 1.

### Offenbarung der Erfindung

Die erfindungsgemäße Verteilervorrichtung mit den Merkmalen des Anspruchs 1 weist demgegenüber den Vorteil auf, dass auf einfache Weise ein Führen von Stoffen und zudem eine Reinigung der Vorrichtung im Einbauzustand und ohne manuellen Eingriff ermöglicht wird. Insbesondere können pharmazeutische partikuläre Feststoffe, Stoffströme oder Portionen von einer oder mehreren Quellen selektiv zu mehreren Empfängern geführt werden. Dies wird durch eine Verteilervorrichtung erreicht, welche einen Prozessraum mit wenigstens einer Einlassöffnung und wenigstens zwei Auslassöffnungen umfasst.

Vorzugsweise werden die Stoffe in der Verteilervorrichtung von einer Einlassöffnung selektiv zu einer der Auslassöffnungen geführt und somit verteilt. Es ist jedoch auch möglich, die Stoffe in entgegengesetzter Richtung zu transportieren, also zu sammeln. Dabei erfolgt das Führen der Stoffe selektiv von einer der Auslassöffnungen zu der Einlassöffnung.

Bevorzugt weist der Prozessraum drei oder bis zu sechs oder mehr Auslassöffnungen auf. Die Einlassöffnungen sowie die Auslassöffnungen können beispielsweise rund oder elliptisch ausgebildet sein. Als Prozessraum kann beispielsweise ein durch ein kugelförmiges, zylindrisches oder sonstiges rotationssymmetrisches Gehäuse begrenzter Raum angesehen werden.

Ein Transport der Stoffe erfolgt bevorzugt gravimetrisch oder pneumatisch. Eine Kombination aus gravimetrischem und pneumatischem Transport ist weiterhin auch möglich. Insbesondere können die Stoffe mittels eines Unterdrucks oder Überdrucks transportiert werden.

Weiterhin weist die Verteilervorrichtung ein Verteilerelement auf. Das Verteilerelement erstreckt sich durch den Prozessraum und verbindet eine Einlassöffnung mit einer der Auslassöffnungen.

Das Verteilerelement ist um eine Rotationsachse rotierend angeordnet. Durch eine Rotation um die Rotationsachse können die verschiedenen Auslassöffnungen, oder Auslassöffnungen und Einlassöffnungen angefahren werden, sodass ein selektives Führen der Stoffe mittels des Verteilerelements möglich ist. Das Verteilerelement kann beispielsweise über eine Antriebswelle, welche von einem Antriebsmotor angetrieben wird, rotiert werden.

In einer Ausführung mit mehreren Einlassöffnungen und mehreren, insbesondere bis zu sechs, Auslassöffnungen verläuft die Rotationsachse durch die Mittelpunkte von Kreisbahnen, auf welchen sich die Einlassöffnungen und die Auslassöffnungen des Prozessraums befinden. Die Einlassöffnungen und die Auslassöffnungen können dabei regelmäßig über die Kreisbahnen verteilt sein, oder auch beliebig auf den jeweiligen Kreisbahnen nebeneinander liegen.

Die Verteilervorrichtung umfasst weiterhin eine Reinigungseinrichtung, welche eingerichtet ist den Prozessraum und das Verteilerelement, insbesondere alle produktberührenden Flächen, zu reinigen. Insbesondere kann durch die Reinigungseinrichtung ein Reinigungsmittel in den Prozessraum und in das Verteilerelement automatisch eingebracht werden, wodurch eine manuelle Reinigung und insbesondere eine aufwändige Demontage zur Reinigung der Komponenten vermieden wird. Durch das spezielle Ausgestalten und Zusammenwirken von Prozessraum, Verteilerelement und Reinigungseinrichtung wird die Fähigkeit der Vor-Ort-Reinigung der Verteilervorrichtung ermöglicht.

Erfindungsgemäß weist die Reinigungseinrichtung wenigstens eine Düse zum Einbringen eines Reinigungsmittels in den Prozessraum auf. Die Düse ist dabei am Prozessraum, beispielsweise an einer Berandung nahe der Einlassöffnung, befestigt. Mittels der Düse kann das Reinigungsmittel sehr gezielt eingebracht und dosiert werden.

Durch die erfindungsgemäße Verteilervorrichtung kann eine besonders kompakte und einfache Vorrichtung zum Führen von Stoffen vorgesehen werden. Die Verteilervorrichtung ist automatisch und ohne Demontage reinigbar und ermöglicht somit eine kostengünstige und effiziente Verarbeitung von Stoffen.

Die Unteransprüche zeigen bevorzugte Weiterbildungen der Erfindung.

Bevorzugt weist der Prozessraum genau eine Einlassöffnung auf. In diesem Fall verläuft die Rotationsachse durch die Einlassöffnung und das Verteilerelement ist mit der Einlassöffnung verbunden. Durch Rotation um die Rotationsachse können Stoffe von der einzigen Einlassöffnung selektiv auf die Auslassöffnungen verteilt werden.

Weiterhin ist es vorteilhaft, wenn die Verteilervorrichtung wenigstens zwei, insbesondere bis zu sechs, Einlassöffnungen umfasst. Damit können verschiedene Quellen und Empfänger selektiv miteinander verbunden werden, wodurch das Führen von Stoffen in komplexen Systemen ermöglicht wird. In diesem Fall umfasst das Verteilerelement einen ersten Verteilerelementabschnitt und einen zweiten Verteilerelementabschnitt und eine Drehkupplung. Die Drehkupplung ist zwischen den beiden Verteilerelementabschnitten angeordnet, um diese drehbar miteinander zu verbinden. Bevorzugt weist die Verteilervorrichtung dabei zwei Antriebswellen und zwei Antriebsmotoren auf, mittels welchen jeweils einen Verteilerelementabschnitt rotiert wird. Somit können die beiden Verteilerelementabschnitte unabhängig voneinander um die Rotationsachse rotieren, sodass durch das Verteilerelement die Einlassöffnungen und die Auslassöffnungen beliebig miteinander verbindbar sind.

Bevorzugt weist der Prozessraum einen Ablaufboden auf, um Flüssigkeit aus dem Prozessraum durch die Auslassöffnungen zu führen. Der Ablaufboden ist bevorzugt gewölbt, insbesondere teilkugelförmig, und derart innerhalb des Prozessraums und an den Auslassöffnungen angeordnet, dass ein vollständiges Ablaufen von Flüssigkeiten, insbesondere des Reinigungsmittels, aus dem Prozessraum ermöglicht wird. Somit können auf einfache Weise Hinterschneidungen oder Ritzen, an welchen sich Reste der zu führenden Stoffe ansammeln können, vermieden werden.

Erfindungsgemäß ist das Reinigungsmittel eine Flüssigkeit.

Vorzugsweise ist der Ablaufboden um die Rotationsachse rotierend angeordnet und mit dem Verteilerelement verbunden, insbesondere mittels eines Arms. Dadurch ist eine besonders einfache Konstruktion, insbesondere des Antriebs, welcher das Verteilerelement rotiert, möglich.

Weiterhin ist es besonders vorteilhaft, wenn die Verteilervorrichtung ferner eine Dichtung umfasst, welche an einem freien Ende des Verteilerelements angeordnet ist. Die Dichtung ist dabei eingerichtet, eine stoffdichte Abdichtung zwischen dem Verteilerelement und der Auslassöffnung herzustellen. Durch eine Dichtung kann besonders einfach sichergestellt werden, dass ein unbeabsichtigter Austritt der zu führenden Stoffe verhindert wird. In einer Ausführung mit mehreren Einlassöffnungen, kann die Verteilervorrichtung auch eine weitere Dichtung umfassen, welche an einem weiteren freien Ende des Verteilerelements angeordnet ist, eine stoffdichte Abdichtung zwischen dem Verteilerelement und der Einlassöffnung herzustellen.

Bevorzugt ist die Dichtung aufblasbar und eingerichtet, durch Beaufschlagung mit Druckluft eine stoffdichte Abdichtung zwischen dem Verteilerelement und der Auslassöffnung herzustellen. Dabei wird Druckluft über einen Drucklufteinlass an die Dichtung geleitet. Mittels einer aufblasbaren Dichtung ist eine besonders einfache und effektive Abdichtung herstellbar. Durch das Aufblasen wird das Volumen der Dichtung vergrößert, wobei sich die Dichtung insbesondere in Richtung der Auslassöffnung ausdehnt und stoffdicht um die Auslassöffnung anlegt. Nach dem Lösen der Abdichtung durch Ablassen der Druckluft, verringert sich das Volumen der Dichtung wieder, wodurch ein Spalt zwischen der Dichtung und der Auslassöffnung entsteht. Dadurch wird eine sehr leichtgängige Rotation des Verteilerelements ermöglicht, da beispielsweise ein Schleifen der Dichtung an einer Wandung des Prozessraums vermieden wird. Analog kann bei mehreren Einlassöffnungen eine stoffdichte Abdichtung zwischen Verteilerelement und Einlassöffnung durch eine weitere aufblasbare Dichtung hergestellt werden.

Besonders bevorzugt ist das Verteilerelement ein bogenförmiges Rohrstück oder ein Schlauch. Dadurch ist eine besonders günstige Gestaltung des Prozessraums und des Verteilerelements möglich. Zudem können die Stoffe durch den bogenförmigen Verlauf effizient transportiert werden. Ein bogenförmiges Rohrstück kann beispielsweise mit einer Antriebswelle verbunden sein, welche sich durch den Ablaufboden erstreckt. Bei einem Schlauch als Verteilerelement ist es besonders günstig, wenn dieser mit einem drehbaren Ablaufboden verbunden ist, insbesondere mittels eines Arms. Eine Rotation um die Rotationsachse kann in diesem Fall erreicht werden, indem der Ablaufboden mittels eines Antriebsmotors angetrieben wird. Der Schlauch wirkt sich durch eine bewegliche Oberfläche besonders günstig auf eine Reinigung an der inneren Oberfläche aus. Zudem ist der Schlauch einfach und günstig zu wechseln, wodurch die Verteilervorrichtung einfach an eine Führung verschiedener, beispielsweise hochaktiver oder aggressiver, Substanzen angepasst werden kann.

Vorzugsweise ist das Verteilerelement doppelwandig ausgeführt. Die beiden Wände des Verteilerelements begrenzen dabei einen Ringkanal, wobei die Querschnittsfläche dieses Ringkanals deutlich kleiner ist, als der von der inneren Wand begrenzte kreisförmige Kanal, durch welchen die Stoffe geführt werden. Über den Ringkanal erfolgt eine Druckluftversorgung der Dichtung. Der Drucklufteinlass kann in diesem Fall nahe der Einlassöffnung der Verteilervorrichtung, bevorzugt außerhalb des Prozessraums, liegen. Mittels des doppelwandigen Verteilerelements ist eine besonders günstige und flexible Konstruktion der Druckluftversorgung bzw. der gesamten Verteilervorrichtung möglich.

Ferner betrifft die Erfindung ein Verfahren zum Verteilen von Stoffen, insbesondere pharmazeutischen partikulären Feststoffen, mittels der Verteilervorrichtung. Das Verfahren umfasst die Schritte:
- Rotieren des Verteilerelements um die Rotationsachse, zum Verbinden einer Einlassöffnung mit einer der Auslassöffnungen, und
- Fördern der Stoffe über die Einlassöffnung und mittels des Verteilerelements durch den Prozessraum und über die Auslassöffnung aus dem Prozessraum. Dabei ist es besonders vorteilhaft möglich, einen bestimmten Stoff mittels der Verteilervorrichtung auf mehrere Abgänge, welche mit den Auslassöffnungen verbunden sind, zu verteilen oder zu dosieren.

Ferner führt die Erfindung außerdem zu einem Verfahren zum Sammeln von Stoffen, insbesondere pharmazeutischen partikulären Feststoffen, mittels der Verteilervorrichtung. Das Verfahren umfasst die Schritte:
- Rotieren des Verteilerelements um die Rotationsachse, zum Verbinden einer Einlassöffnung mit einer der Auslassöffnungen, und
- Fördern der Stoffe über die Auslassöffnung und mittels des Verteilerelements durch den Prozessraum und über die Einlassöffnung aus dem Prozessraum. Hierbei ist es besonders vorteilhaft möglich, mehrere verschiedene Stoffe mittels der Verteilervorrichtung von mehreren Zugängen, welche mit den Auslassöffnungen verbunden sind, zu sammeln und mit einem einzigen Abgang, welcher mit der Einlassöffnung verbunden ist, abzutransportieren.

Besonders bevorzugt umfasst das Verfahren ferner den Schritt:
- Aufblasen der Dichtung mittels Druckluft, zum Herstellen einer stoffdichten Abdichtung zwischen dem Verteilerelement und der Auslassöffnung, oder der Auslassöffnung und der Einlassöffnung.

Als besonders vorteilhaft wird es angesehen, wenn das Fördern der Stoffe gravimetrisch und/oder pneumatisch erfolgt. Dabei kann bevorzugt ein Unterdruck eingesetzt werden, um die Stoffe durch die Verteilervorrichtung zu saugen, oder ein Überdruck zum Pressen der Stoffe durch die Verteilervorrichtung.

Ferner betrifft die Erfindung ein Verfahren zum Reinigen der Verteilervorrichtung. Das Verfahren umfasst die Schritte:
- Fördern eines Reinigungsmittels über eine Einlassöffnung in das Verteilerelement,
- abwechselndes Fördern des Reinigungsmittels mittels des Verteilerelements über die Auslassöffnungen aus dem Prozessraum,
- Fördern des Reinigungsmittels über die Düse in den Prozessraum, und
- Fördern von Trocknungsluft in den Prozessraum und in das Verteilerelement, wobei das Reinigen der Verteilervorrichtung ohne Demontage der Verteilervorrichtung und ohne manuellen Eingriff erfolgt.

Die Trocknungsluft sollte möglichst trocken (im Bereich von 1-10 g Wasser pro kg Luft) und warm (im Bereich von 30-90 °C) sein, um in kurzer Zeit viel Feuchte aufzunehmen. Das Verfahren kann automatisch und ohne Eingriff des Anwenders durchgeführt werden. Durch die entsprechende Ausgestaltung der Verteilervorrichtung ist es mit diesem Verfahren möglich, eine vollständig rückstandslose Reinigung der Verteilervorrichtung ohne Demontage zu erzielen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht einer Verteilervorrichtung gemäß einem ersten Ausführungsbeispiel der Erfindung,
- Figur 2: eine vereinfachte schematische Ansicht einer Verteilervorrichtung gemäß einem zweiten Ausführungsbeispiel der Erfindung, und
- Figur 3: eine vereinfachte schematische Ansicht einer Verteilervorrichtung gemäß einem dritten Ausführungsbeispiel der Erfindung.

### Ausführungsformen der Erfindung

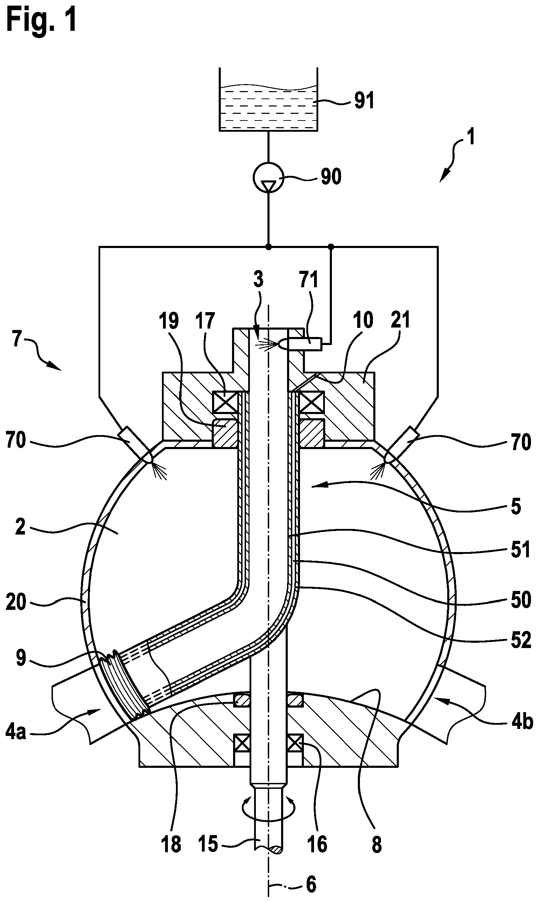

Die Figur 1 zeigt eine Verteilervorrichtung 1 gemäß einem ersten Ausführungsbeispiel.

Ein Prozessraum 2 wird durch ein im Wesentlichen kugelförmiges Gehäuse 20 mit einem Deckel 21 und einem gewölbten Ablaufboden 8 gebildet. Der Prozessraum 2 weist eine einzige Einlassöffnung 3 auf. Im ersten Ausführungsbeispiel weist der Prozessraum 2 eine erste Auslassöffnung 4a und eine zweite Auslassöffnung 4b, welche sich gegenüberliegen, auf. Es können zudem auch weitere Auslassöffnungen vorgesehen sein.

Mit der Einlassöffnung 3 ist ein Verteilerelement 5 verbunden. Durch die Einlassöffnung 3 verläuft eine Rotationsachse 6, um welche das Verteilerelement 5 rotierend angeordnet ist. Das Verteilerelement ist in der Figur 1 bogenförmig und derart angeordnet, dass es die Einlassöffnung 3 mit der ersten Auslassöffnung 4a verbindet. Die Auslassöffnungen 4a und 4b liegen auf dem Umfang eines Kreises, welcher in einer Ebene senkrecht zur Rotationsachse 6 liegt. Somit kann das Verteilerelement 5 durch Rotation um die Rotationsachse 6 wahlweise mit der ersten Auslassöffnung 4a oder mit der zweiten Auslassöffnung 4b verbunden werden.

Das Verteilerelement 5 weist an seinem freien Ende eine aufblasbare Dichtung 9 auf, um eine stoffdichte Abdichtung mit der Auslassöffnung 4a herzustellen. Die aufblasbare Dichtung 9 ist beispielsweise aus einem Gummi oder gummiähnlichem Material gebildet und ähnlich einem Faltenbalg geformt. Wird die Dichtung 9 mit Druckluft beaufschlagt, so vergrößert sich ihr Volumen, bis die Dichtung 9 an der Innenseite des Gehäuses 20 anliegt und somit die stoffdichte Abdichtung zwischen dem Verteilerelement 5 und der Auslassöffnung 4a herstellt. Dieser Zustand ist jeweils in den Figuren dargestellt. Zum Lösen der Abdichtung wird Druckluft abgelassen, wodurch sich das Volumen der Dichtung 9 wieder verringert. Eine Rotation des Verteilerelements 5 ist dann möglich, ohne dass beispielsweise die Dichtung 9 an der Innenwand des Gehäuses 20 schleift. Somit sind nur sehr geringe Antriebskräfte für eine Rotation des Verteilerelements 5 notwendig.

Das Verteilerelement 5 ist im ersten Ausführungsbeispiel in Figur 1 ein starres bogenförmiges Rohrstück und am Scheitelpunkt des Bogens fest mit einer Antriebswelle 15 verbunden, welche das Verteilerelement 5 antreibt. Ein Antriebsmotor, welcher nicht dargestellt ist, kann ein Drehmoment auf die Antriebswelle 15 übertragen und damit die Rotation des Verteilerelements 5 bewirken.

Weiterhin ist das Verteilerelement 5 doppelwandig ausgeführt. Eine innere Wand 51 begrenzt dabei einen kreisförmigen Kanal, durch welchen die zu transportierenden Stoffe geführt werden. Von der inneren Wand 51 und einer äußeren Wand 52 wird ein ringförmiger Kanal 50 eingeschlossen, wobei die Querschnittsfläche des ringförmigen Kanals 50 deutlich kleiner ist, als die Querschnittsfläche des von der inneren Wand 51 begrenzten kreisförmigen Kanals. Über den ringförmigen Kanal 50 erfolgt eine Druckluftversorgung der aufblasbaren Dichtung 9. Der ringförmige Kanal 50 ist mit einem Drucklufteinlass 10 verbunden, welcher nahe der Einlassöffnung 3 liegt und sich durch den Deckel 21 erstreckt. Beispielsweise kann der Drucklufteinlass 10 eine Bohrung sein, welche sich durch den Deckel 21 erstreckt und auch bei Rotation des Verteilerelements 5 stets eine Verbindung zum ringförmigen Kanal 50 aufweist.

Zur Abdichtung des Prozessraums 2 sowie auch des ringförmigen Kanals 50 ist in dem Deckel 21 eine Dichtung 19 vorgesehen, wobei der Drucklufteinlass 10 an der Dichtung 19 vorbeiführt.

Weiterhin ist ein Lager 17 zur Lagerung des Verteilerelements 5 in dem Deckel 21 vorgesehen. An der der Einlassöffnung 3 gegenüberliegende Seiten sind eine weitere Dichtung 18 und ein weiteres Lager 16 angeordnet, zur Abdichtung des Prozessraums 2 bzw. zur Lagerung der Antriebswelle 15. Die Dichtung 18 und das Lager 16 sind in dem Ablaufboden 8 vorgesehen.

Der gewölbte Ablaufboden 8 ist teilkugelförmig ausgestaltet und ermöglicht ein vollständiges Ablaufen von Flüssigkeit aus dem Prozessraum 2 durch die Auslassöffnungen 4a, 4b. Dafür ist der Ablaufboden 8 derart angeordnet, dass sich ein stufenloser Übergang von dem Ablaufboden 8 zu den Auslassöffnungen 4a, 4b ergibt. Bei einer vertikalen Ausrichtung der Verteilervorrichtung 1, das heißt wenn die Rotationsachse 6 wie in der Figur 1 dargestellt in vertikaler Richtung verläuft, ist somit ein glatter Übergang von den niedrigsten Punkten des Ablaufbodens 8 zu den Auslassöffnungen 4a, 4b vorgesehen. Dadurch kann Flüssigkeit aus dem Prozessraum 2 ungehindert ablaufen und es wird auf einfache Weise verhindert, dass sich Flüssigkeit oder Reste der zu transportierenden Stoffe, insbesondere bei einer Reinigung, an Hinterschneidungen im Inneren des Prozessraums 2 ansammeln können.

Somit sind die Voraussetzungen für eine vollständige Reinigung der Verteilervorrichtung 5, insbesondere dessen produktberührende Flächen, ohne Demontage der Verteilervorrichtung 1 sowie ohne manuellen Eingriff gegeben. Die weiteren Elemente und Schritte zur Durchführung des ReinigungsVerfahrens werden nachfolgend beschrieben.

Für eine vollständige und automatische Reinigung umfasst die Verteilervorrichtung 1 eine Reinigungseinrichtung 7, welche im in Figur 1 gezeigten Ausführungsbeispiel als Düsen 70, 71, welche ein Reinigungsmittel einbringen können, umgesetzt ist. Zwei Düsen 70 sind an dem Gehäuse 20 benachbart zu dem Deckel 21 und bezüglich der Rotationsachse 6 gegenüberliegend angeordnet, um eine möglichst gute Verteilung des Reinigungsmittels innerhalb des Prozessraums 2 zu erzielen. Das Reinigungsmittel kann dabei, wie beschrieben, mittels des Ablaufbodens 8 vollständig über die Auslassöffnungen 4a, 4b ablaufen. Eine Reinigung der stoffführenden Teile, also der Einlassöffnung 3, dem inneren kreisförmigen Kanal des Verteilerelements 5 und der Auslassöffnungen 4a, 4b, kann durchgeführt werden, indem das Reinigungsmittel in die Einlassöffnung 3 eingebracht wird. Hierfür ist im abgebildeten Ausführungsbeispiel eine weitere Düse 71 nahe der Einlassöffnung 3 vorgesehen. Es ist jedoch auch möglich, das Reinigungsmittel direkt in eine nicht abgebildete Zuleitung, über welche auch die zu führenden Stoffe zur Einlassöffnung 3 zugeführt werden, einzubringen. In diesem Fall ist die Düse 71 zum Einspritzen in das Verteilerelement 5 nicht notwendig. Eine Zuführung des Reinigungsmittels zu den Düsen 70, 71 erfolgt mittels einer Pumpe 90, welche das Reinigungsmittel aus einem Reinigungsmitteltank 91 bezieht.

Durch abwechselndes Fördern des Reinigungsmittels durch das Verteilerelement 5 und durch jede der Auslassöffnungen 4a, 4b aus dem Prozessraum 2 können auch diese Teile vollständig und automatisch gereinigt werden.

Nach dem Reinigen der Verteilervorrichtung 5 mit dem Reinigungsmittel, wird der Verteilervorrichtung 5 Trocknungsluft zugeführt, welche möglichst warm (im Bereich von 30-90 °C) und trocken (im Bereich von 1-10 g Wasser pro kg Luft) ist. Die Trocknungsluft kann beispielsweise wie das Reinigungsmittel über Düsen 70 am Gehäuse 20 sowie eine weitere Düse 71 nahe der Einlassöffnung 3 oder über eine nicht abgebildete Zuleitung zur Einlassöffnung 3 eingebracht werden.

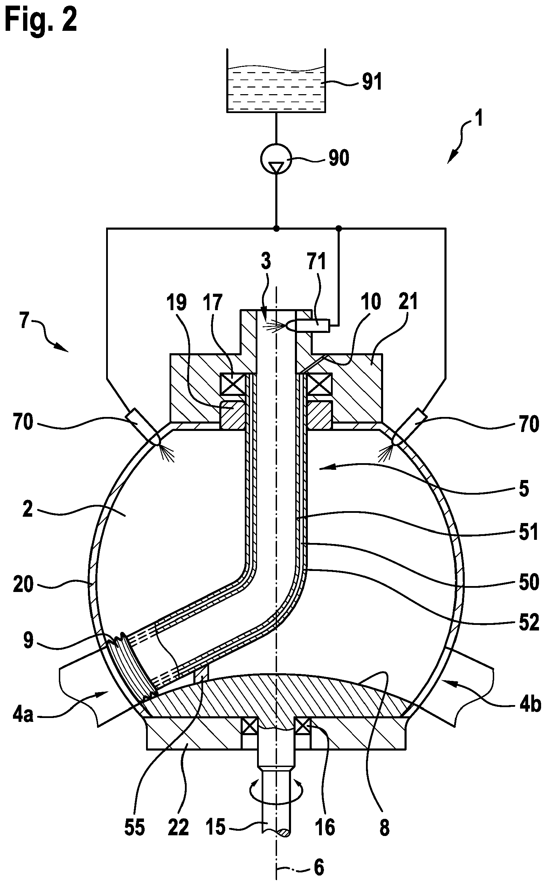

Ein zweites Ausführungsbeispiel der Verteilervorrichtung 1 ist in Figur 2 dargestellt. Das zweite Ausführungsbeispiel unterscheidet sich von dem ersten Ausführungsbeispiel insbesondere durch eine gekürzte Welle 15, einen drehbaren Ablaufboden 8 und einer alternativen Befestigung des Verteilerelements 5. Das Verteilerelement 5 ist dabei mittels eines Verbindungselements 55, insbesondere in Form eines Armes, mit dem drehbaren Ablaufboden 8 fest verbunden. Die weitere Konfiguration ist im Wesentlichen gleich dem ersten Ausführungsbeispiel.

Der drehbare Ablaufboden 8 ist im zweiten Ausführungsbeispiel direkt mit der gekürzten Antriebswelle 15 verbunden. Die Antriebswelle 15 ist dabei in einem weiteren fest mit dem Gehäuse 20 verbundenen Boden 22 mittels eines Lagers 16 gelagert.

Das Verteilerelement 5 ist nahe dessen freien Ende, an welchem die aufblasbare Dichtung 9 angeordnet ist, mittels des Verbindungselements 55 fest mit dem Ablaufboden 8 verbunden. Eine derartige Konstruktion ist besonders vorteilhaft, wenn das Verteilerelement 5 ein Schlauch ist. Durch die Befestigung nahe dem freien Ende ist das Verteilerelement 5 relativ zu den Auslassöffnungen 4a, 4b stets so positioniert, dass trotz der Flexibilität des Schlauchs eine leckagefreie Verbindung des Verteilerelements 5 mit den Auslassöffnungen 4a, 4b möglich ist.

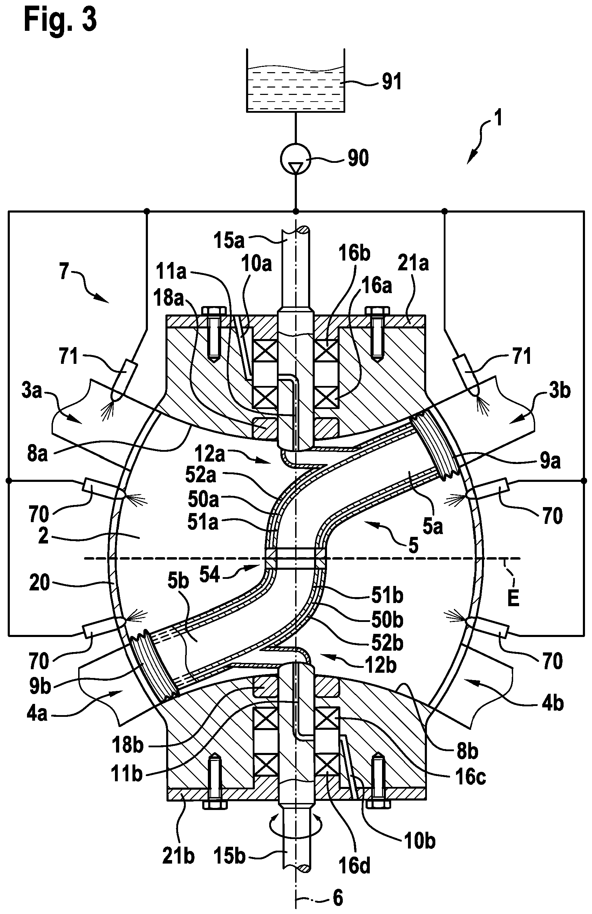

In Figur 3 ist ein drittes Ausführungsbeispiel der erfindungsgemäßen Verteilervorrichtung 1 dargestellt. Dabei ist eine Möglichkeit gezeigt, Stoffe von mehreren Einlassöffnungen 3a, 3b zu mehreren Auslassöffnungen 4a, 4b zu führen. In der Figur 3 sind beispielhaft zwei Einlassöffnungen 3a, 3b und zwei Auslassöffnungen 4a, 4b abgebildet. Das Verteilerelement 5 ist zweiteilig ausgeführt mit einem ersten Verteilerelementabschnitt 5a und einem zweiten Verteilerelementabschnitt 5b, welche mittels einer Drehkupplung 54 drehbar miteinander verbunden sind. Die beiden Verteilerelementabschnitte 5a, 5b sind dabei mittels separater Antriebe über zwei Antriebswellen 15a, 15b unabhängig voneinander rotierbar. Das Verteilerelement 5 hat zwei freie Enden, welche jeweils eine aufblasbare Dichtung 9a, 9b aufweisen, zur stoffdichten Abdichtung mit einer der Einlassöffnungen 3a, 3b und mit einer der Auslassöffnungen 4a, 4b.

Somit ist die Verteilervorrichtung 1 im Wesentlichen symmetrisch zu einer Ebene E, welche senkrecht zur Rotationsachse 6 ist und welche mittig auf der Drehkupplung 54 liegt, wobei Düsen 70, 71 lediglich am Prozessraum 2 und nahe der Einlassöffnungen 3a, 3b angeordnet sind und nicht nahe der Auslassöffnungen 4a, 4b.

Im dritten Ausführungsbeispiel sind die beiden Antriebswellen 15a, 15b jeweils mittels zwei Lagern 16a, 16b bzw. 16c, 16d in den Ablaufböden 8a, 8b gelagert. Zudem sind alternative Ausgestaltungen der Druckluftzuführung und der Verbindung der Antriebswellen 15a, 15b mit den Verteilerelementabschnitten 5a, 5b gezeigt. Druckluft wird über jeweils eine Bohrung 11a, 11b innerhalb der Antriebswellen 15a, 15b zugeführt. Eine Verbindung der Verteilerelementabschnitte 5a, 5b mit den Antriebswellen 15a, 15b erfolgt über radial verlaufende Rohrelemente 11a, 11b, welche zudem eine Druckluftzuführung zu den Ringkanälen 50a, 50b der Verteilerelementabschnitte 5a, 5b ermöglichen.

Dabei sei anzumerken, dass diese alternativen Möglichkeiten der Lagerung mittels zwei Lagern, der Druckluftzuführung über die Antriebswelle sowie der Befestigung des Verteilerelements mittels Rohrelementen auch im ersten und zweiten Ausführungsbeispiel umgesetzt werden können. Ebenso kann das dritte Ausführungsbeispiel beispielsweise jeweils nur ein Lager zur Lagerung der Antriebswellen aufweisen.

## Patentansprüche

1. Verteilervorrichtung zum Führen von Stoffen, insbesondere pharmazeutischen partikulären Feststoffen, umfassend:
- einen Prozessraum (2) mit wenigstens einer Einlassöffnung (3) und mit wenigstens zwei Auslassöffnungen (4),
- ein Verteilerelement (5), zum Verteilen der Stoffe,
- wobei sich das Verteilerelement (5) durch den Prozessraum (2) erstreckt, um die Einlassöffnung (3) mit einer der Auslassöffnungen (4) zu verbinden, wobei das Verteilerelement (5) um eine Rotationsachse (6) rotierend angeordnet ist, und
- eine Reinigungseinrichtung (7), welche eingerichtet ist, den Prozessraum (2) und das Verteilerelement (5) zu reinigen,
- wobei die Reinigungseinrichtung (7) wenigstens eine Düse (70) aufweist, und
- wobei die Düse (70) am Prozessraum (2) angeordnet ist, zum Einbringen eines flüssigen Reinigungsmittels in den Prozessraum (2).

2. Verteilervorrichtung nach Anspruch 1, wobei der Prozessraum (1) genau eine Einlassöffnung (3) aufweist, wobei das Verteilerelement (4) mit der Einlassöffnung (3) verbunden ist, und wobei die Rotationsachse (6) durch die Einlassöffnung (3) verläuft.

3. Verteilervorrichtung nach Anspruch 1, wobei der Prozessraum (2) wenigstens zwei Einlassöffnungen aufweist, wobei das Verteilerelement (5) einen ersten Verteilerelementabschnitt (5a), einen zweiten Verteilerelementabschnitt (5b) und eine Drehkupplung (54) umfasst, und wobei die Drehkupplung (54) zwischen dem ersten Verteilerelementabschnitt (5a) und dem zweiten Verteilerelementabschnitt (5b) angeordnet ist, zum drehbaren Verbinden der beiden Verteilerelementabschnitte (5a, 5b).

4. Verteilervorrichtung nach einem der vorhergehenden Ansprüche, wobei der Prozessraum (2) einen Ablaufboden (8), insbesondere einen teilkugelförmigen Ablaufboden (8), aufweist, um Flüssigkeit aus dem Prozessraum (2) durch die Auslassöffnungen (4) zu führen.

5. Verteilervorrichtung nach einem der vorhergehenden Ansprüche, wobei der Ablaufboden (8) um die Rotationsachse (6) rotierend angeordnet ist und mit dem Verteilerelement (5) verbunden ist.

6. Verteilervorrichtung nach einem der vorhergehenden Ansprüche, ferner umfassend eine Dichtung (9), welche an einem freien Ende des Verteilerelements (5) angeordnet ist,
wobei die Dichtung (9) eingerichtet ist, eine stoffdichte Abdichtung des Verteilerelements (5) an der Auslassöffnung (4), oder an der Auslassöffnung (4) und an der Einlassöffnung (3) herzustellen.

7. Verteilervorrichtung nach Anspruch 6, wobei die Dichtung (9) aufblasbar ist und eingerichtet ist, durch Beaufschlagung mit Druckluft über einen Drucklufteinlass (10) eine stoffdichte Abdichtung des Verteilerelements (5) an der Auslassöffnung (4), oder an der Auslassöffnung (4) und an der Einlassöffnung (3) herzustellen.

8. Verteilervorrichtung nach Anspruch 7, wobei das Verteilerelement (5) doppelwandig ist, und wobei eine Druckluftversorgung der Dichtung (9) über einen Ringkanal (50), welcher durch die doppelte Wand des Verteilerelements (5) gebildet ist, erfolgt.

9. Verteilervorrichtung nach einem der vorhergehenden Ansprüche, wobei das Verteilerelement (5) ein bogenförmiges Rohrstück oder ein Schlauch ist.

10. Verfahren zum Verteilen von Stoffen, insbesondere pharmazeutischen partikulären Feststoffen, mittels einer Verteilervorrichtung nach einem der vorhergehenden Ansprüche, umfassend die Schritte:
- Rotieren des Verteilerelements (5) um die Rotationsachse (6), zum Verbinden einer Einlassöffnung (3) mit einer der Auslassöffnungen (4), und
- Fördern der Stoffe über die Einlassöffnung (3) und mittels des Verteilerelements (5) durch den Prozessraum (2) und über die Auslassöffnung (4) aus dem Prozessraum (2).

11. Verfahren zum Sammeln von Stoffen, insbesondere pharmazeutischen partikulären Feststoffen, mittels einer Verteilervorrichtung nach einem der Ansprüche 1 bis 9, umfassend die Schritte:
- Rotieren des Verteilerelements (5) um die Rotationsachse (6), zum Verbinden einer Einlassöffnung (3) mit einer der Auslassöffnungen (4), und
- Fördern der Stoffe über die Auslassöffnung (4) und mittels des Verteilerelements (5) durch den Prozessraum (2) und über die Einlassöffnung (3) aus dem Prozessraum (2).

12. Verfahren nach einem der Ansprüche 10 oder 11, ferner umfassend den Schritt:
- Aufblasen der Dichtung (9) mittels Druckluft, zum Herstellen einer stoffdichten Abdichtung des Verteilerelements (5) an der Auslassöffnung (4), oder an der Auslassöffnung (4) und an der Einlassöffnung (3).

13. Verfahren nach einem der Ansprüche 10 bis 12, wobei das Fördern der Stoffe gravimetrisch und/oder pneumatisch, insbesondere mittels Unterdruck oder Überdruck, erfolgt.

14. Verfahren zum Reinigen einer Verteilervorrichtung nach einem der Ansprüche 10 bis 13, ferner umfassend die Schritte:
- Fördern eines Reinigungsmittels über eine Einlassöffnung (3) in das Verteilerelement (5),
- abwechselndes Fördern des Reinigungsmittels mittels des Verteilerelements (5) über die Auslassöffnungen (4) aus dem Prozessraum (2),
- Fördern des Reinigungsmittels über die Düse (70) in den Prozessraum (2), und
- Fördern von Trocknungsluft in den Prozessraum (2) und in das Verteilerelement (5),
wobei das Reinigen der Verteilervorrichtung ohne Demontage der Verteilervorrichtung und ohne manuellen Eingriff erfolgt.

## Claims

1. Distributor device for guiding materials, in particular particulate pharmaceutical solids, comprising:
- a process chamber (2) having at least one inlet opening (3) and having at least two outlet openings (4),
- a distributor element (5) for distributing the materials,
- wherein the distributor element (5) extends through the process chamber (2) in order to connect the inlet opening (3) to one of the outlet openings (4), wherein the distributor element (5) is arranged rotatably about an axis of rotation (6), and
- a cleaning apparatus (7) which is designed to clean the process chamber (2) and the distributor element (5),
- wherein the cleaning device (7) has at least one nozzle (70), and
- wherein the nozzle (70) is arranged on the process chamber (2) in order to introduce a liquid cleaning agent into the process chamber (2).

2. Distributor device according to claim 1, wherein the process chamber (1) has precisely one inlet opening (3), wherein the distributor element (4) is connected to the inlet opening (3), and wherein the axis of rotation (6) runs through the inlet opening (3).

3. Distributor device according to claim 1, wherein the process chamber (2) has at least two inlet openings, wherein the distributor element (5) comprises a first distributor element portion (5a), a second distributor element portion (5b), and a rotary coupling (54), and wherein the rotary coupling (54) is arranged between the first distributor element portion (5a) and the second distributor element portion (5b), in order to rotatably connect the two distributor element portions (5a, 5b).

4. Distributor device according to any of the preceding claims, wherein the process chamber (2) has a drainage floor (8), in particular a partially spherical drainage floor (8), in order to guide liquid out of the process chamber (2) through the outlet openings (4).

5. Distributor device according to any of the preceding claims, wherein the drainage floor (8) is arranged rotatably about the axis of rotation (6) and is connected to the distributor element (5).

6. Distributor device according to any of the preceding claims, further comprising a seal (9) which is arranged at a free end of the distributor element (5),
wherein the seal (9) is designed to produce material-tight sealing of the distributor element (5) at the outlet opening (4), or at the outlet opening (4) and at the inlet opening (3).

7. Distributor device according to claim 6, wherein the seal (9) is inflatable and is designed to produce, by pressurization with compressed air via a compressed air inlet (10), material-tight sealing of the distributor element (5) at the outlet opening (4), or at the outlet opening (4) and at the inlet opening (3).

8. Distributor device according to claim 7, wherein the distributor element (5) is double-walled, and wherein compressed air is supplied to the seal (9) via an annular channel (50), which is formed by the double wall of the distributor element (5).

9. Distributor device according to any of the preceding claims, wherein the distributor element (5) is a curved section of pipe or a hose.

10. Method for distributing materials, in particular particulate pharmaceutical solids, by means of a distributor device according to any of the preceding claims, comprising the steps of:
- rotating the distributor element (5) about the axis of rotation (6) in order to connect an inlet opening (3) to one of the outlet openings (4), and
- conveying the materials via the inlet opening (3) and by means of the distributor element (5) through the process chamber (2) and via the outlet opening (4) out of the process chamber (2).

11. Method for collecting materials, in particular particulate pharmaceutical solids, by means of a distributor device according to any of claims 1 to 9, comprising the steps of:
- rotating the distributor element (5) about the axis of rotation (6) in order to connect an inlet opening (3) to one of the outlet openings (4), and
- conveying the materials via the outlet opening (4) and by means of the distributor element (5) through the process chamber (2) and via the inlet opening (3) out of the process chamber (2).

12. Method according to claim 10 or 11, further comprising the step of:
- inflating the seal (9) by means of compressed air in order to produce material-tight sealing of the distributor element (5) at the outlet opening (4), or at the outlet opening (4) and at the inlet opening (3).

13. Method according to any of claims 10 to 12, wherein the materials are conveyed gravimetrically and/or pneumatically, in particular by means of negative pressure or positive pressure.

14. Method for cleaning a distributor device according to any of claims 10 to 13, further comprising the steps of:
- conveying a cleaning agent into the distributor element (5) via an inlet opening (3),
- alternately conveying the cleaning agent by means of the distributor element (5) via the outlet openings (4) out of the process chamber (2),
- conveying the cleaning agent through the nozzle (70) into the process chamber (2), and
- conveying drying air into the process chamber (2) and into the distributor element (5),
wherein the distributor device is cleaned without dismantling the distributor device and without manual intervention.

## Revendications

1. Dispositif de distribution pour l'acheminement de substances, en particulier de matières solides
particulaires pharmaceutiques, comprenant :
- une chambre de traitement (2) avec au moins une ouverture d'entrée (3) et avec au moins deux ouvertures de sortie (4),
- un élément de distribution (5), pour distribuer les substances,
- dans lequel l'élément de distribution (5) s'étend à travers la chambre de traitement (2) pour relier l'ouverture d'entrée (3) à l'une des ouvertures de sortie (4), dans lequel l'élément de distribution (5) est disposé de manière à tourner autour d'un axe de rotation (6), et
- un appareil de nettoyage (7), lequel est conçu pour nettoyer la chambre de traitement (2) et l'élément de distribution (5),
- dans lequel l'appareil de nettoyage (7) présente au moins une buse (70), et
- dans lequel la buse (70) est disposée sur la chambre de traitement (2), pour introduire un produit de nettoyage liquide dans la chambre de traitement (2).

2. Dispositif de distribution selon la revendication 1, dans lequel la chambre de traitement (1) présente exactement une ouverture d'entrée (3), dans lequel l'élément de distribution (4) est relié à l'ouverture d'entrée (3), et dans lequel l'axe de rotation (6) passe par l'ouverture d'entrée (3) .

3. Dispositif de distribution selon la revendication 1, dans lequel la chambre de traitement (2) présente au moins deux ouvertures d'entrée, dans lequel l'élément de distribution (5) comprend une première section d'élément de distribution (5a), une deuxième section d'élément de distribution (5b) et un accouplement rotatif (54), et dans lequel l'accouplement rotatif (54) est disposé entre la première section d'élément de distribution (5a) et la deuxième section d'élément de distribution (5b), pour relier de manière rotative les deux sections d'élément de distribution (5a, 5b).

4. Dispositif de distribution selon l'une quelconque des revendications précédentes, dans lequel la chambre de traitement (2) présente un fond d'évacuation (8), en particulier un fond d'évacuation (8) partiellement sphérique, pour guider le liquide hors de la chambre de traitement (2) à travers les ouvertures de sortie (4).

5. Dispositif de distribution selon l'une quelconque des revendications précédentes, dans lequel le fond d'évacuation (8) est disposé de manière à tourner autour de l'axe de rotation (6) et est relié à l'élément de distribution (5).

6. Dispositif de distribution selon l'une quelconque des revendications précédentes, comprenant en outre un joint d'étanchéité (9), lequel est disposé à une extrémité libre de l'élément de distribution (5),
dans lequel le joint d'étanchéité (9) est conçu pour réaliser une étanchéité étanche à la matière de l'élément de distribution (5) au niveau de l'ouverture de sortie (4), ou au niveau de l'ouverture de sortie (4) et de l'ouverture d'entrée (3) .

7. Dispositif de distribution selon la revendication 6, dans lequel le joint d'étanchéité (9) est gonflable et est conçu pour réaliser une étanchéité étanche à la matière de l'élément de distribution (5) au niveau de l'ouverture de sortie (4), ou au niveau de l'ouverture de sortie (4) et au niveau de l'ouverture d'entrée (3), par alimentation avec de l'air comprimé par une entrée d'air comprimé (10).

8. Dispositif de distribution selon la revendication 7, dans lequel l'élément de distribution (5) est à double paroi, et dans lequel une alimentation en air comprimé du joint d'étanchéité (9) s'effectue par l'intermédiaire d'un canal annulaire (50), lequel est formé par la double paroi de l'élément de distribution (5).

9. Dispositif de distribution selon l'une quelconque des revendications précédentes, dans lequel l'élément de distribution (5) est un élément tubulaire en forme d'arc ou un tuyau.

10. Procédé de distribution de substances, en particulier de matières solides particulaires pharmaceutiques, au moyen d'un dispositif de distribution selon l'une quelconque des revendications précédentes, comprenant les étapes de :
- rotation de l'élément de distribution (5) autour de l'axe de rotation (6), pour relier une ouverture d'entrée (3) à l'un' des ouvertures de sortie (4), et
- transport des substances par l'ouverture d'entrée (3) et au moyen de l'élément de distribution (5) à travers la chambre de traitement (2) et hors de la chambre de traitement (2) par l'ouverture de sortie (4).

11. Procédé de collecte de substances, en particulier de matières solides particulaires pharmaceutiques, au moyen d'un dispositif de distribution selon l'une quelconque des revendications 1 à 9, comprenant les étapes de :
- rotation de l'élément de distribution (5) autour de l'axe de rotation (6), pour relier une ouverture d'entrée (3) à l'une des ouvertures de sortie (4), et
- transport des substances par l'ouverture de sortie (4) et au moyen de l'élément de distribution (5) à travers la chambre de traitement (2) et hors de la chambre de traitement (2) par l'ouverture d'entrée (3).

12. Procédé selon l'une quelconque des revendications 10 ou 11, comprenant en outre l'étape de :
- gonflage du joint d'étanchéité (9) au moyen d'air comprimé, pour réaliser une étanchéité étanche à la matière de l'élément de distribution (5) au niveau de l'ouverture de sortie (4), ou au niveau de l'ouverture de sortie (4) et de l'ouverture d'entrée (3).

13. Procédé selon l'une quelconque des revendications 10 à 12, dans lequel le transport des substances s'effectue de manière gravimétrique et/ou pneumatique, en particulier au moyen d'une dépression ou surpression.

14. Procédé de nettoyage d'un dispositif de distribution selon l'une quelconque des revendications 10 à 13, comprenant en outre les étapes de :
- transport d'un produit de nettoyage par une ouverture d'entrée (3) dans l'élément de distribution (5),
- transport alterné du produit de nettoyage au moyen de l'élément de distribution (5) par les ouvertures de sortie (4) hors de la chambre de traitement (2),
- acheminement du produit de nettoyage par l'intermédiaire de la buse (70) dans la chambre de traitement (2), et
- transport de l'air de séchage dans la chambre de traitement (2) et dans l'élément de distribution (5),
dans lequel le nettoyage du dispositif de distribution s'effectue sans démontage du dispositif de distribution et sans intervention manuelle.
